# FASCICULE DE BREVET EUROPEEN

(11) **EP 0 601 928 B1**
(45) Date de publication et mention de la délivrance du brevet: **17.10.2001**
(21) Numéro de dépôt: 93402959.6
(22) Date de dépôt: 07.12.1993
(51) Int. Cl.: C03C 17/22, C03C 17/245

(54) **Procédé de traitement de couches minces à base d'oxyde ou de nitrure métallique**
Verfahren zur Behandlung von dünnen Schichten aus Metalloxide oder Nitride
Process for the treatment of metal oxide or nitride thin films

(30) Priorité: 11.12.1992 FR 9214911
(43) Date de publication de la demande: 15.06.1994
(73) Titulaire: SAINT-GOBAIN GLASS FRANCE, 92400 Courbevoie (FR)
(72) Inventeur: Lerbet, François, F-75010 Paris (FR); Pillias, Danièle, F-93600 Aulnay sous Bois (FR)
(74) Mandataire: Muller, René

(56) Documents cités:
- WO-A-91/17283
- MATERIALS RESEARCH SOCIETY SYMPOSIA PROCEEDINGS vol. 27 , 1984 , BOSTON pages 765 - 770 G.K.HUBLER ETAL 'ion implantation and ion beam processing of materials'
- STROUD, P. T.: "Ion bombardment and implantation and their application to thin films ", THIN SOLID FILMS, , 1972, Vol. 11, no. , pages 1 à 26
- ROSSNAGEL ET AL: "Handbook of plasma processing technology", 1990, NOYES PUBLICATIONS, PARK RIDGE, NJ, USA

## Description

L'invention a trait à un procédé de traitement de couches minces à base d'un ou plusieurs oxydes, nitrures, oxynitrures ou oxycarbures métallique(s), et plus particulièrement celles déposées sur un substrat transparent, notamment en verre à l'aide d'une technique utilisant le vide, directement ou par l'intermédiaire d'autres couches.

L'invention concerne également l'application de ce procédé à la fabrication de vitrages.

En effet, en vue de la fabrication de vitrages dits "fonctionnels", on dépose usuellement sur au moins un des substrats qui les composent une couche mince ou un empilement de couches minces, afin de conférer auxdits vitrages des propriétés optiques, par exemple anti-réfléchissantes, des propriétés dans l'infra-rouge (basse-émissivité) et/ou des propriétés de conductivité électrique. Des couches à base d'oxyde et/ou de nitrure métallique sont alors très fréquemment utilisées, par exemple en tant que diélectrique de part et d'autre d'une couche basse-émissive type couche d'argent ou couche d'oxyde métallique dopé ; ou en tant que couche interférentielle dans des empilements alternant des oxydes ou nitrures à bas et hauts indices de réfraction.

Se pose alors le problème de la durabilité chimique et/ou physique de ces couches ou empilements de couches, problème d'autant plus crucial que le substrat revêtu est destiné à être utilisé en tant que vitrage monolithique, la ou les couches étant directement exposées aux agressions de l'atmosphère ambiante. Même lorsque le substrat est destiné à faire partie d'un vitrage multiple (double-vitrage, vitrage feuilleté), les couches restent soumises à des aggressions dues aux diverses manipulations lors de la fabrication du vitrage.

Il est connu, notamment de la publication "Ion-based methods for optical thin film deposition" (Journal of Material Science ; JP Martin, 21 (1986)1-25), une technique expérimentale dite d'IAD (Ion-Assisted Deposition) ou d'assistance au dépôt par faisceaux d'ions, qui permet de modifier la structure de couches minces d'oxyde. Cette technique consiste à effectuer le dépôt de la couche par une technique d'évaporation tout en soumettant la couche, tout au long de son dépôt, au bombardement d'ions oxygène ou argon, ce qui permet d'en augmenter la compacité et l'adhérence au substrat porteur, par un phénomène encore non complètement élucidé. Cependant, ce type de dépôt assisté est de réalisation très complexe, et de fait il n'est applicable qu'à des substrats de très petites dimensions, vu les problèmes posés notamment en termes de convergence entre d'une part le faisceau d'ions et d'autre part les particules, issues de l'évaporation provenant d'une source très localisée, qui font croître la couche sur le substrat.

Il est connu par ailleurs de la demande de brevet EP-A-0 328 257 une technique de dépôt de couches d'oxyde par pulvérisation cathodique dont le but est d'accélérer les vitesses de dépôt en procédant de la manière suivante : on effectue tout d'abord le dépôt d'une couche de métal à partir d'une cible métallique appropriée dans une atmosphère inerte puis on convertit la couche de métal en une couche d'oxyde métallique en la soumettant à une source d'ions susceptibles de générer un plasma d'ions oxydants. Ladite source d'ions est donc ici responsable d'une transformation chimique d'oxydation, l'utilisation envisagée visant essentiellement les verres optiques et non les vitrages.

L'invention a alors pour but la mise au point d'un procédé de traitement de couches à base d'un ou plusieurs oxydes, nitrures, oxynitrures ou oxycarbures, pour les rendre plus résistantes chimiquement et/ou physiquement, traitement palliant les inconvénients précités, c'est-à-dire qui soit réalisable quelle que soit la taille du substrat, et à l'échelle industrielle.

L'objet de l'invention est un procédé de traitement de couches d'un ou plusieurs oxydes, nitrures, oxynitrures ou oxycarbures métalliques déposées sur un substrat transparent, notamment en verre par une technique de pulvérisation cathodique, notamment assistée par champ magnétique et de préférence réactive en présence d'oxygène et/ou d'azote. Ledit procédé consiste à effectuer le dépôt de la couche et à faire suivre le dépôt par au moins une étape de traitement par faisceau d'ions. Cette étape consiste à soumettre la couche ainsi déposée à un faisceau d'ions « à faible énergie », c'est-à-dire d'énergie inférieure ou égale à 500 ev lors de leur impact sur la couche à traiter.

On comprend dans le cadre de l'invention l'expression faisceau d'ions « à faible énergie » comme un faisceau dont les paramètres sont choisis de manière à limiter au maximum la pulvérisation de la couche formée sous l'impact des ions du faisceau. Cette notion est bien sûr à prendre en compte en fonction de la vitesse de pulvérisation intrinsèque à chaque matériau envisagé.

Le traitement selon l'invention permet d'augmenter notablement la durabilité physique et/ou chimique de ces couches, qui semble pouvoir s'expliquer tout à la fois par une densification des couches, qui peut se traduire concrètement par une augmentation de leur indice de réfraction et par un certain « lissage » en surface, les couches traitées selon l'invention présentant notamment une plus faible rugosité de surface que les couches standard déposées par pulvérisation cathodique. Cette dernière caractéristique peut ainsi en outre avantageusement promouvoir une meilleure adhérence et un meilleur « nappage » d'une couche déposée ultérieurement sur la couche ainsi traitée.

Ainsi, et de manière surprenante, les auteurs de l'invention sont parvenus au but recherché en utilisant une technique de dépôt, la pulvérisation cathodique, parfaitement adaptée aux exigences industrielles d'une fabrication en grande série de vitrages de toutes tailles, en y associant un traitement par faisceau d'ions. On peut « découper » totalement l'étape de dépôt et celle du traitement par faisceau d'ions. Cette dissociation supprime ainsi tous les problèmes rencontrés dans les techniques de dépôt assisté et rend la procédé aisé de mise en oeuvre dans la mesure où le dépôt se fait par une technique industrielle éprouvée et où le traitement par faisceau d'ions peut se faire consécutivement au dépôt dans la même installation.

Un mode préféré de réalisation de l'invention consiste à effectuer le dépôt de la couche de manière séquentielle, et à faire suivre au moins une des étapes de dépôt séquentiel par au moins une étape de traitement par le faisceau d'ions. Avantageusement, on peut ainsi alterner systématiquement dépôt séquentiel et traitement par faisceau d'ions. On peut choisir de déposer la couche par une succession de dépôts séquentiels, avantageusement de 5 à 30 nanomètres, notamment de 15 à 20 nanomètres, lorsque l'épaisseur finale souhaitée est de l'ordre d'au moins 30 nanomètres ; ou de l'ordre de 5 nanomètres lorsque l'épaisseur finale souhaitée est moins importante, ces dépôts séquentiels étant alternés par un traitement par faisceau d'ions. De cette manière, on peut optimiser l'efficacité du faisceau d'ions et densifier au mieux la couche. En effet, on peut alors opérer tous les compromis possibles, en termes notamment d'épaisseur déposée au cours de chacun des dépôts séquentiels et de réglage du faisceau, en fonction de la nature de la couche, de son épaisseur finale, de ses performances physiques et mécaniques souhaitées, et en fonction des exigences industrielles. En général, la durée de chaque traitement par faisceau d'ions est de préférence inférieure à 30 minutes, notamment entre 1 et 10 minutes.

On améliore en outre l'adhésion entre couche et substrat si l'on effectue, avant tout dépôt, un pré-traitement consistant à soumettre le substrat nu au faisceau d'ions.

Les caractéristiques du faisceau d'ions sont bien sûr importantes. On préfère, dans le cas de dépôt d'oxydes, oxynitrures ou oxycarbures, utiliser un faisceau dont au moins une partie des ions sont de nature oxydante, comme de l'oxygène ionisé. Mais au moins une partie des ions peut également être par exemple de l'argon ionisé ou de l'azote ionisé, notamment dans le cas de dépôt de nitrures.

L'énergie du faisceau dit "à faible énergie" comme déjà mentionné, doit être assez faible pour ne pas pulvériser de manière trop importante la couche traitée, tout en étant assez élevée pour que, sous l'impact des ions, la couche soit effectivement rendue plus résistante. La valeur de l'énergie est en outre à adapter suivant l'épaisseur de la couche qui est frappée par le faisceau d'ions et de la facilité à se pulvériser du matériau avec lequel on souhaite faire une couche. En pratique, on préfère des valeurs d'énergie des ions, lors de leur impact sur la couche, qui soient inférieures ou égales à 500 électrons-volt, notamment inférieures ou égales à 200 e.v, par exemple entre 200 et 50 e.v, comme de l'ordre de 80 ou 100 e.v.

De même, la densité ionique du faisceau d'ions est de préférence réglée de manière à être de l'ordre de un à quelques milliampères par cm².

Le procédé selon l'invention s'applique notamment aux couches d'oxyde de titane ou de tantale, aux couches d'oxyde de zinc ou d'étain, d'oxyde ou de nitrure de silicium, de nitrure de titane.

L'invention a également pour objet le dispositif de mise en oeuvre de ce procédé, ledit dispositif étant muni d'au moins une cathode, équipée d'une cible appropriée et d'au moins une source de faisceau d'ions comme un canon à ions, soit dans une même enceinte de pulvérisation, soit dans deux enceintes distinctes. Dans le cas d'enceintes distinctes, on peut alors choisir, dans chacune des enceintes, des conditions de pression et de composition d'atmosphère légèrement différentes ou identiques.

Le substrat peut être monté mobile par rapport à la cible et au canon de façon à pouvoir être consécutivement recouvert d'une couche mince par pulvérisation de la cible puis traité par le faisceau généré par la source de faisceau. Une installation pour réaliser l'invention comporte ainsi, par exemple, une enceinte où sont disposés en alternance cathodes et canons à ions, de manière à ce que le substrat à traiter se déplace de manière linéaire, successive et horizontale en face desdits dispositifs.

L'invention a également pour objet les couches ainsi obtenues, présentant un durcissement, soit une plus grande durabilité, et/ou une densité plus grande et/ou une rugosité moins élevée que les couches déposées par simple pulvérisation cathodique notamment.

Ces couches peuvent ainsi être utilisées pour la fabrication de vitrages.

D'autres détails et caractéristiques avantageuses de l'invention ressortent de la description suivante d'exemples de réalisation non limitatifs, à l'aide des figures 1 et 2, permettant d'évaluer les performances des couches obtenues à l'aide de deux tests ci-après décrits, ainsi que des figures 3 et 4 qui donnent par spectroscopie de masse la structure d'une couche traitée selon l'invention.

Tous concernent le dépôt séquentiel d'une couche mince à base d'oxyde de titane, d'oxyde de tantale, d'oxyde d'étain ou de silicium, sur un substrat en verre clair silico-sodo-calcique de dimensions 15 x 10 cm² à l'aide d'un dispositif de pulvérisation cathodique assistée par champ magnétique et en atmosphère réactive comprenant de l'oxygène. Les cibles à pulvériser sont respectivement en titane, en tantale, en étain ou en silicium dopé, la cathode verticale a une longueur de 210 mm et une largeur de 90 mm. Le substrat en verre est mobile verticalement car fixé sur caroussel, ce qui permet d'alternativement effectuer le dépôt par pulvérisation de la cible et traiter par faisceau d'ions la couche déposée, faisceau généré par un canon à ions disposé sur un axe perpendiculaire au substrat et commercialisé sous le nom de Commenwealth Mark II par la société Commenwealth Scientific. Ce type de canon émet dans le cas présent un faisceau d'ions oxygène dont la densité ionique, mesurée à 15 cm de la source d'émission est d'environ 1,2 mA/cm². Lors du traitement, le substrat se trouve à environ 14 cm de distance du point d'émission du faisceau.

Dans les exemples suivants, on effectue, avant tout dépôt, un pré-traitement du substrat en le soumettant pendant 1 minute au faisceau d'ions oxygène, sous une énergie inférieure ou égale à 60 e.v et une densité ionique d'au moins 0,7 mA/cm².

Afin d'évaluer la durabilité chimique et physique des couches traitées selon l'invention, celles-ci ont été soumises, à tout le moins pour le premier exemple, à deux types de test : le test dit "Taber" est le test permettant d'apprécier la résistance à l'abrasion de la couche. Il est effectué à l'aide de meules faites de poudre abrasive noyée dans un élastomère. La machine est fabriquée par la Société Taber Instrument Corporation aux Etats-Unis. Il s'agit du modèle 174, "Standard Abrasion Tester", les meules sont de type CS10F chargées de 500 grammes. La couche est soumise à 650 rotations. On mesure son abrasion à la diminution progressive de sa réflexion lumineuse R_{L} à une longueur d'onde de 550 nm.

Le test dit "test HCl" consiste à plonger le substrat revêtu dans une solution aqueuse d'HCl d'une concentration 1 mole/litre et chauffée à 100°C jusqu'à la dégradation de la couche ; se traduisant également par une diminution de R_{L}.

Certains des résultats de ces tests sont regroupés dans les figures jointes.

Par ailleurs, l'état de surface des couches a été analysé par microscopie à force atomique. On a pu évaluer ainsi leur rugosité, mesurée par la valeur de l'écart quadratique moyen (dit "Root Mean Square" ou RMS en anglais) sur une surface de un micromètre carré et exprimée en angstrôms.

### EXEMPLE 1

Le prétraitement du substrat s'effectue à l'aide du faisceau sous une énergie de 60 e.v et une densité ionique de 0,7 mA/cm².

On dépose par 3 dépôts séquentiels de 15 nm une couche d'oxyde de titane de 45 nm. Chaque dépôt est fait dans les conditions suivantes :
- pression : 0,264 Pa (2.10⁻³ torr)
- atmosphère : argon/oxygène dont 15 % volumique d'oxygène
- puissance appliquée : 2,4 Watt/cm²

Chacun de ces dépôts est suivi par un traitement par le faisceau d'ions oxygène dans les conditions suivantes :
- énergie des ions lors de leur impact sur la couche : 84 e.v
- densité ionique : 1,2 mA/cm²
- durée de traitement : 5 minutes

La couche obtenue est densifiée, ce qui se traduit par une augmentation non négligeable de son indice de réfraction, égal à 2,45, alors qu'une couche de TiO₂ dite ci-après "standard" de même épaisseur déposée dans les mêmes conditions mais sans traitement par faisceau d'ions a un indice de 2,37. Elle est de plus beaucoup moins rugueuse en surface puisque l'écart quadratique moyen de la rugosité n'est que de 14 angströms (1,4 nanomètre), alors que celui de la couche standard atteint 35 angströms (3,5 nanomètres).

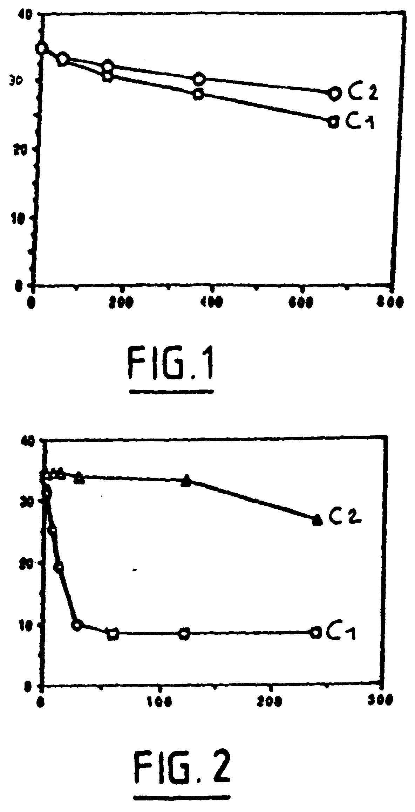

Les figures 1 et 2 donnent les résultats respectivement aux tests "Taber" et "HCl" d'une couche de TiO₂ standard (courbes C1) et la couche selon l'exemple 1 (courbes C2). En figure 1, le nombre de tours d'abrasion est donné en abscisse, la valeur de réflexion lumineuse R_{L} en pourcentage en ordonnée. En figure 2, en abscisse figure le temps exprimé en minutes et en ordonnée la valeur de R_{L}. Les figures montrent clairement que la couche de l'exemple 1 résiste beaucoup mieux à l'abrasion mécanique et à l'attaque acide que la couche standard.

### EXEMPLE 2

En répétant les conditions de pré-traitement, de dépôt et de traitement par faisceau d'ions de l'exemple 1, on dépose en 6 dépôts séquentiels alternés avec 6 traitements par faisceau une couche d'oxyde de titane de 900 nm.

La couche ainsi traitée est densifiée, son indice de réfraction étant de 2,52 au lieu de 2,37 pour une couche "standard" de même épaisseur. Sa rugosité est en outre diminuée dans des proportions considérables, puisque son écart quadratique moyen de rugosité n'est que de 2,6 angströms (0,26 nanomètre) alors qu'une couche "standard" présente un écart de 35 angströms (3,5 nanomètres).

### EXEMPLE 3

Le pré-traitement du substrat s'effectue à l'aide du faisceau réglé à une énergie de 45 e.v et une densité ionique de 1,4 m A/cm².

Puis on dépose par 3 dépôts séquentiels de 5 nanomètres une couche de 15 nanomètres d'oxyde de titane, dépôts alternés par 3 traitements par faisceau d'ions dans les mêmes conditions que dans les exemples précédents. On évalue sa résistance chimique en la testant par le test "HCl" en comparaison avec une couche de TiO₂ de même épaisseur "standard", c'est-à-dire déposée par pulvérisation cathodique sans traitement par faisceau d'ions.

Après 8 minutes, la couche "standard" est complètement dégradée, la valeur de R_{L} mesurée est celle du verre nu. Au contraire, la couche traitée selon l'invention résiste puisqu'elle ne se dégrade complètement qu'au-delà de 2 heures (R_{L} égale à 9,3 % au bout de 2 heures).

### EXEMPLE 4

On dépose en un seul dépôt une couche de 25 nm d'oxyde de tantale. Le dépôt est fait dans les conditions suivantes :
- pression : 0,264 Pa (2.10⁻³ torr)
- atmosphère : argon/oxygène dont 30 % volumique d'oxygène
- puissance appliquée : 1,45 W/cm²

Ce dépôt est suivi par un traitement par faisceau d'ions oxygène dans les conditions suivantes :
- énergie des ions lors de leur impact sur la couche : 84 e.v
- densité ionique : 1,2 m A/cm²
- durée de traitement : 5 minutes.

La couche traitée est densifiée. Son écart quadratique moyen de rugosité est de 1,9 angströms (0,19 nanomètre), alors que celui d'une couche d'oxyde de tantale de même épaisseur déposée par la même méthode de dépôt mais non traitée est de 4,1 angströms (0,41 nanomètre).

### EXEMPLE 5

On effectue un pré-traitement du substrat à l'aide du faisceau sous une énergie de 45 e.v et une densité ionique de 1,4 mA/cm² pendant 1 minute.

On dépose par trois dépôts séquentiels de 23 nm chacun une couche finale de 30 nm d'oxyde d'étain SnO₂
- pression : 0,2 Pa (1,5.10⁻³ torr)
- atmosphère : argon/oxygène dont 69 % volumique d'oxygène
- puissance appliquée : 0,9 Watt/cm²

Chacun des dépôts est suivi d'un traitement par le faisceau d'ions oxygène dans les conditions suivantes :
- énergie des ions lors de leur impact sur la couche : 84 e.v
- densité ionique : 1,9 mA/cm²
- durée de traitement : 3 minutes

La couche obtenue est durcie de manière très significative, ce qui se traduit par notamment une durabilité chimique exceptionnelle. On a ainsi soumis d'une part cette couche, et d'autre part une couche de SnO₂ "standard" de 30 nm déposée en une étape par pulvérisation mais sans traitement par faisceau d'ions au "test HCl". La couche "standard" se dégrade totalement au bout de 30 minutes, tandis que la couche selon l'invention ne présente encore aucune trace de dégradation significative au bout de 48 heures.

On a pu noter que l'oxyde d'étain de la couche, connu pour avoir une vitesse de pulvérisation élevée, avait du coup tendance à se repulvériser, puisqu'après trois dépôts de 23 nm, une couche de seulement 30 nm est finalement obtenue. On confirme là que pour un faisceau d'ions de même énergie (84 e.v), l'effet de repulvérisation limitée ou non de la couche traitée dépend du matériau en question. Une repulvérisation limitée n'a pas de conséquences pénalisantes notables, sauf éventuellement en termes de coût de matières premières, coût ici raisonnable pour l'oxyde d'étain.

### EXEMPLE 6

On effectue un pré-traitement du substrat comme à l'exemple 5.

On dépose ensuite par radio-fréquence en une seule fois 30 nm d'oxyde de silicium SiO₂ dopé au bore (quelques pourcents) dans les conditions suivantes :
- pression : 0,2 Pa (1,5.10⁻³ torr)
- atmosphère : argon/oxygène dont environ 30 % volumique d'oxygène
- puissance appliquée : 2,6 Watt/cm².

Le dépôt est suivi d'un traitement par le faisceau d'ions oxygène dans les conditions suivantes :
- énergie des ions lors de leur impact sur la couche : 60 e.v
- densité ionique : 2,2 mA/cm²
- durée du traitement : 5 minutes.

On observe que la couche ainsi traitée est plus durable, notamment en terme de résistance aux aggressions chimiques, et tout particulièrement de résistance aux alcalins.

### EXEMPLE 7

On effectue un pré-traitement du substrat comme à l'exemple 6.

On dépose par deux dépôts séquentiels de 20 nm chacun une couche de 40 nm d'oxyde de silicium SiO₂ dopé au bore comme précédemment par radio-fréquence.

Chacun des deux dépôts est suivi d'un traitement par faisceau d'ions oxygène dans les mêmes conditions qu'à l'exemple 6.

Là encore, la durabilité de la couche a été sensiblement améliorée.

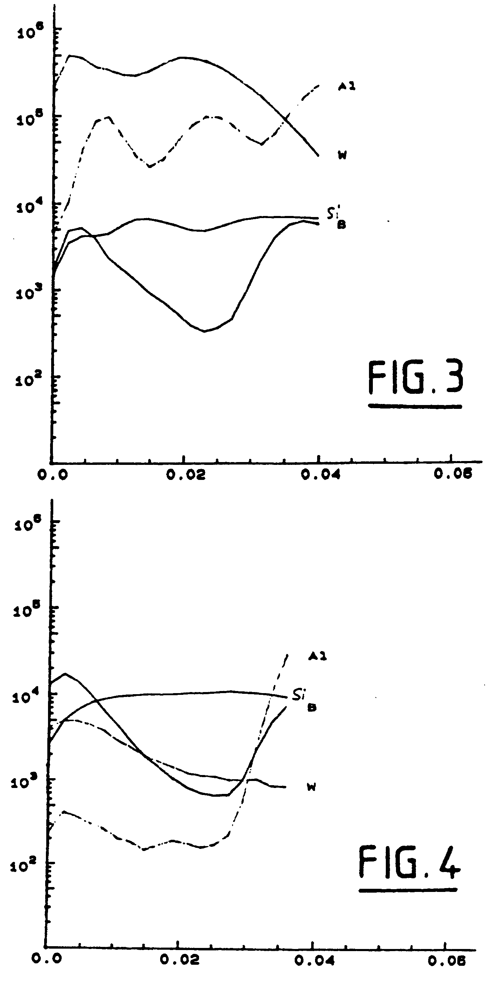

On a effectué les mesures en spectrométrie de masse par un appareillage SIMS (abréviation anglaise pour Secondary Ion Mass Spectroscopy) d'une part d'une couche de SiO₂ dopé au bore "standard" de 40 nm déposée en une fois sans traitement à la figure 4, d'autre part de la couche de l'exemple 7 à la figure 3.

Sur ces figures 3 et 4 sont représentées en abscisse les épaisseurs des couches en question exprimées en micromètres. En ordonnée, de manière connue, figurent les intensités d'ions secondaires exprimées en coups/seconde des mesures.

Sur chacune d'elles, figurent les courbes dites "Si" qui correspondent donc au silicium contenu dans l'oxyde. On voit très clairement à la figure 3 que la courbe "Si" présente un certain fléchissement au milieu de l'épaisseur de la couche, qui traduit la présence d'une sorte "d'interface" entre les couches déposées à chacun des deux dépôts séquentiels.

Au contraire, à la figure 4, aucun fléchissement de ce genre n'est détectable.

C'est donc la preuve que les couches déposées et traitées selon l'invention sont modifiées structurellement et gardent la trâce des traitements qu'elles ont subi, à tout le moins superficiellement dans la zone d'interface entre dépôts séquentiels (les courbes correspondent à l'aluminium "Al" et au tungstène "W" signifient simplement que ces impuretés sont présentes dans les enceintes de pulvérisation. Elles disparaîtraient bien sûr si d'autres appareils de dépôts étaient utilisés).

En conclusion, le procédé selon l'invention permet d'améliorer très nettement la durabilité d'une couche mince à base d'un ou plusieurs oxydes, nitrures, oxynitrures ou oxycarbures métallique(s) sans pour autant imposer des contraintes qui rendraient non envisageable son application à une production de série de substrats de grandes dimensions. Ce durcissement serait dû à un phénomène de densification dans l'épaisseur de la couche, éventuellement combinée à une modification de surface de celle-ci, notamment d'un applanissement.

Par ailleurs, le procédé présente une grande souplesse de mise en oeuvre, puisque l'on peut optimiser, indépendamment ou non, le traitement par faisceau d'ions en le dissociant de l'opération de dépôt à proprement dite.

## Revendications

1. Procédé de traitement en vue d'augmenter la durabilité chimique et/ou physique d'une couche à base d'un ou plusieurs oxydes, nitrures, oxynitrures ou oxycarbures métalliques déposée sur un substrat transparent, notamment en verre, par une technique de pulvérisation cathodique, notamment assistée par champ magnétique et de préférence réactive en présence d'oxygène et/ou d'azote, ***caractérisé en ce qu'il*** consiste à effectuer le dépôt de la couche et à faire suivre le dépôt par au moins une étape de traitement par faisceau d'ions, étape consistant à soumettre la couche à un faisceau d'ions dont l'énergie lors de leur impact sur la couche à traiter est inférieure ou égale à 500 électrons-volt.

2. Procédé selon la revendication 1, ***caractérisé en ce qu'il*** consiste à effectuer le dépôt de la couche de manière séquentielle et à faire suivre au moins une des étapes de dépôt séquentiel par l'étape de traitement par faisceau d'ions.

3. Procédé selon l'une des revendications précédentes, ***caractérisé en ce qu'on*** fait précéder le dépôt de la couche par une étape de pré-traitement du substrat à l'aide d'un faisceau d'ions.

4. Procédé selon l'une des revendications précédentes, ***caractérisé en ce qu'au*** moins une partie des ions du faisceau d'ions sont de nature oxydante.

5. Procédé selon l'une des revendications 1 à 4, ***caractérisé en ce qu'au*** moins une partie des ions du faisceau d'ions sont de nature non oxydante, comme de l'argon ou de l'azote ionisé.

6. Procédé selon l'une des revendications précédentes, ***caractérisé en ce que*** l'énergie du faisceau d'ions est inférieure à 200 électrons-volts.

7. Procédé selon l'une des revendications précédentes, ***caractérisé en ce que*** la densité du courant ionique du faisceau d'ions est de l'ordre de 1 à 2,2 milliampères par cm².

8. Procédé selon l'une des revendications précédentes, ***caractérisé en ce qu'il*** traite des couches à base d'oxyde de titane ou de nitrure de titane, à base d'oxyde de tantale, à base d'oxyde d'étain ou de zinc ou à base d'oxyde ou de nitrure de silicium.

9. Procédé selon la revendication 2, ***caractérisé en ce qu'on*** fait suivre chaque étape de dépôt séquentiel par une étape de traitement par faisceau d'ions.

10. Procédé selon l'une des revendications 2 ou 9, ***caractérisé en ce que*** chaque étape de dépôt séquentiel a une durée d'au plus 30 minutes, et notamment comprise entre 1 et 10 minutes.

11. Procédé selon l'une des revendications précédentes, ***caractérisé en ce qu'il*** durcit et/ou densifie et lisse en surface la couche par le traitement par faisceau d'ions subi, de façon à ce qu'elle présente après traitement un écart quadratique moyen de rugosité d'au plus 1,4 nanomètre.

12. Application du procédé selon l'une des revendications précédentes à la fabrication de vitrages comportant au moins une couche traitée à base d'un ou plusieurs oxydes, nitrures, oxynitrures ou oxycarbures métallique(s).

## Patentansprüche

1. Verfahren zur Behandlung einer Schicht auf der Basis von einem oder mehreren Metalloxiden, -nitriden, -nitridoxiden bzw. -carbidoxiden, die auf einem speziell aus Glas bestehenden transparenten Substrat durch ein insbesondere magnetfeldgestütztes und vorzugsweise in Gegenwart von Sauerstoff und/oder Stickstoff reaktives Kathodenzerstäubungsverfahren aufgebracht ist, zur Erhöhung ihrer chemischen und/oder physikalischen Beständigkeit, **dadurch gekennzeichnet, dass** es darin besteht, die Schicht aufzubringen und nach dem Abscheidevorgang mindestens eine Stufe einer Behandlung mit Ionenstrahlung durchzuführen, in welcher die Schicht einer Ionenstrahlung ausgesetzt wird, deren Energie beim Auftreffen auf die zu behandelnde Schicht kleiner oder gleich 500 Elektronenvolt ist.

2. Verfahren nach Anspruch 1, **dadurch gekennzeichnet, dass** die Schicht sequentiell aufgebracht und auf mindestens einen der sequentiellen Abscheideschritte die Behandlungsstufe mit lonenstrahlung folgen gelassen wird.

3. Verfahren nach einem der vorhergehenden Ansprüche, **dadurch gekennzeichnet, dass** dem Aufbringen der Schicht eine Stufe der Vorbehandlung des Substrats mit einer Ionenstrahlung vorhergeht.

4. Verfahren nach einem der vorhergehenden Ansprüche, **dadurch gekennzeichnet, dass** wenigstens ein Teil der Ionen der Ionenstrahlung oxidierend wirkt.

5. Verfahren nach einem der Ansprüche 1 bis 4, **dadurch gekennzeichnet, dass** wenigstens ein Teil der Ionen der Ionenstrahlung nicht-oxidierend wirkt, wie ionisiertes Argon oder ionisierter Stickstoff.

6. Verfahren nach einem der vorhergehenden Ansprüche, **dadurch gekennzeichnet, dass** die Energie der Ionenstrahlung weniger als 200 Elektronenvolt beträgt.

7. Verfahren nach einem der vorhergehenden Ansprüche, **dadurch gekennzeichnet, dass** die Ionenstromdichte der Ionenstrahlung etwa 1 bis 2,2 Milliamper pro cm² beträgt.

8. Verfahren nach einem der vorhergehenden Ansprüche, **dadurch gekennzeichnet, dass** Schichten auf der Basis von Titanoxid bzw. Titannitrid, Tantaloxid, Zinnoxid bzw. Zinkoxid oder Siliciumoxid bzw. Siliciumnitrid behandelt werden.

9. Verfahren nach Anspruch 2, **dadurch gekennzeichnet, dass** auf jeden sequentiellen Abscheideschritt eine Behandlungsstufe mit Ionenstrahlung folgt.

10. Verfahren nach Anspruch 2 oder 9, **dadurch gekennzeichnet, dass** die Dauer eines sequentiellen Abscheideschritts höchstens 30 Minuten und insbesondere 1 bis 10 Minuten beträgt.

11. Verfahren nach einem der vorhergehenden Ansprüche, **dadurch gekennzeichnet, dass** die Oberfläche der Schicht durch die durchgeführte Behandlung mit Ionenstrahlung derart gehärtet und/oder verdichtet und geglättet wird, dass ihr quadratischer Rauhtiefenmittelwert höchstens 1,4 Nanometer beträgt.

12. Anwendung des Verfahrens nach einem der vorhergehenden Ansprüche auf die Herstellung von Glasscheiben, die mindestens eine behandelte Schicht auf der Basis von einem oder mehreren Metalloxiden, -nitriden, -nitridoxiden oder -carbidoxiden umfassen.

## Claims

1. Treatment process with a view to increasing the chemical and/or physical durability of a coating based on one or more metal oxides, nitrides, oxynitrides or oxycarbides deposited on a transparent substrate, particularly of glass, by a cathodic sputtering method, particularly magnetic field-assisted and preferably reactive in the presence of oxygen and/or nitrogen, **characterized in that** it consists of carrying out the deposition of the coating and following the same by at least one ion beam treatment stage, which consists of exposing the coating to the action of an ion beam, whose energy during impact thereof on the coating to be treated is equal to or below 500 electronvolts.

2. Process according to claim 1, **characterized in that** it consists of performing the deposition of the coating sequentially and following at least one of the sequential deposition stages by the ion beam treatment stage.

3. Process according to one of the preceding claims, **characterized in that** the deposition of the coating is preceded by a stage of pretreating the substrate with the aid of an ion beam.

4. Process according to one of the preceding claims, **characterized in that** at least part of the ions of the ion beam are of an oxidizing nature.

5. Process according to one of the claims 1 to 4, **characterized in that** at least part of the ions of the ion beam are of a non-oxidizing nature, such as argon or ionized nitrogen.

6. Process according to one of the preceding claims, **characterized in that** the energy of the ion beam is below 200 electronvolts.

7. Process according to one of the preceding claims, **characterized in that** the density of the ion current of the ion beam is approximately 1 to 2.2 milliamperes/cm².

8. Process according to one of the preceding claims, **characterized in that** treatment takes place of coatings based on titanium oxide or titanium nitride, based on tantalum oxide, based on tin or zinc oxide or based on silicon oxide or nitride.

9. Process according to claim 2, **characterized in that** each sequential deposition stage is followed by an ion beam treatment stage.

10. Process according to one of the claims 2, or 9 **characterized in that** each sequential deposition stage lasts at the most 30 minutes and is in particular between 1 and 10 minutes.

11. Process according to one of the preceding claims, **characterized in that** hardening and/or densifying and surface smoothing of the coating takes place as a result of the ion beam treatment performed, so that after treatment it has a standard roughness deviation of at the most 1.4 nanometre.

12. Application of the process according to one of the preceding claims to the production of glazings incorporating at least one treated coating based on one or more metal oxides, nitrides, oxynitrides or oxycarbides.
